# EUROPEAN PATENT SPECIFICATION

(11) **EP 2 462 736 B1**
(45) Date of publication and mention of the grant of the patent: **30.10.2013**
(21) Application number: 10731579.8
(22) Date of filing: 15.06.2010
(51) Int. Cl.: H04N 5/278, H04N 13/00, G06T 7/00

(54) **RECOMMENDED DEPTH VALUE FOR OVERLAYING A GRAPHICS OBJECT ON THREE-DIMENSIONAL VIDEO**
EMPFOHLENER TIEFENWERT ZUR ÜBERLAGERUNG EINES GRAFISCHEN OBJEKTS AUF DREIDIMENSIONALEM VIDEO
PROFONDEUR RECOMMANDÉE POUR SUPERPOSER UN OBJET GRAPHIQUE SUR VIDÉO TRIDIMENSIONNEL

(30) Priority: 08.09.2009 GB 0915658
(43) Date of publication of application: 13.06.2012
(73) Proprietor: NDS Limited, Staines, Middlesex TW18 4EX (GB)
(72) Inventor: MURRAY, Kevin, A, Fordingbridge Hampshire SP6 1DB (GB); PARNALL, Simon, John, Kingswood Surrey KT20 6PP (GB); TAYLOR, Ray, Hook Hampshire RG27 9RA (GB); WALKER, James, Geoffrey, Winchester Hampshire SO23 7QE (GB)
(74) Representative: White, Duncan Rohan
(86) International application number: PCT/IB2010/052664
(87) International publication number: WO 2011/030234

(56) References cited:
- EP-A1- 0 905 988
- EP-A2- 0 735 784
- WO-A1-2006/111893
- WO-A1-2008/115222
- WO-A1-2009/083885
- WO-A2-2008/038205

## Description

### FIELD OF THE INVENTION

The present invention relates to a method of generating a recommended depth value for use in displaying a graphics item over a three dimensional video; and to a method of operating a display device to display a graphics item over a three dimensional video.

### BACKGROUND OF THE INVENTION

Graphics items such as subtitles and on-screen display messages (OSDs) are often overlayed on top of video. In standard two-dimensional (2D) television, graphics items can simply be placed on top of the video. Whilst this might obscure video of interest, it does not generate any visual conflict. However, in the case of three-dimensional (3D) television, placing graphics items on top of the video without any consideration of the depth at which the graphics item is to be placed at can result in the graphics item itself being obscured by something in the 3D video image appearing in front of the graphics item. This causes a degree of visual dissonance that can significantly impact the overall impression of 3D television.

Some graphics items include "x,y" locations for placement of the graphics item on the screen and these are typically embedded into the graphics item information. 3D DVDs that are available today all place graphics items at a single, fixed depth (equivalent to the screen depth).

Some 3D video coding mechanisms utilize a grey-scale depth map. This is generated from views taken from different camera angles, and provides depth information for each pixel location, and is generated automatically by the encoding process.

The following references are believed to represent the state of the art:
www.displaydaily.com/2007/10/24/making-3d-movies-part-ii;
International Patent Publication WO2008/115222 to Thomson Licensing;
International Patent Publication WO2008/038205 to Koninklijke Philips Electronics N.V.;
International Patent Publication WO2008/044191 to Koninklijke Philips Electronics N.V.;
Patent Abstracts of Japan JP 2004274125 to Sony Corp;
United States Patent Publication US 2009/0027549 to Weisgerber; and
United States Patent Publication US 2008/0192067 to Koninklijke Philips Electronics N.V;

EP-A-0 905 988 ; WO-A-2009/083885;WO-A-2009/083 863.

### SUMMARY OF THE INVENTION

There is provided in accordance with an embodiment of the present invention a method as defined in claim 1, including generating a recommended depth value for use in displaying a graphics item over a three dimensional video, the method including at a headend: receiving a three dimensional video including video frames; analyzing a sequence of said video frames of the three dimensional video in turn to produce a sequence of depth maps, each depth map in the sequence of depth maps being associated with timing data relating that depth map to a corresponding video frame in the sequence of video frames, each depth map including depth values, each depth value representing a depth of a pixel location in its corresponding video frame; selecting a region in the depth maps of the sequence of depth maps; analyzing the region in the depth maps of the sequence to identify a furthest forward depth value for said region in the sequence of depth maps; and transmitting the furthest forward depth value as the recommended depth value for the region to a display device and region information describing the region.

Further, in accordance with embodiments of the present invention, the methods defined in dependent claims 2 - 13 are also provided.

### BRIEF DESCRIPTION OF THE DRAWINGS

The present invention will be understood and appreciated more fully from the following detailed description, taken in conjunction with the drawings in which:
Fig. 1 is a simplified pictorial illustration of a system constructed and operative in accordance with embodiments of the present invention; and
Fig. 2 is a flow chart of process executed by the processing module of fig. 1, according to embodiments of the present invention.

### DETAILED DESCRIPTION OF EMBODIMENTS

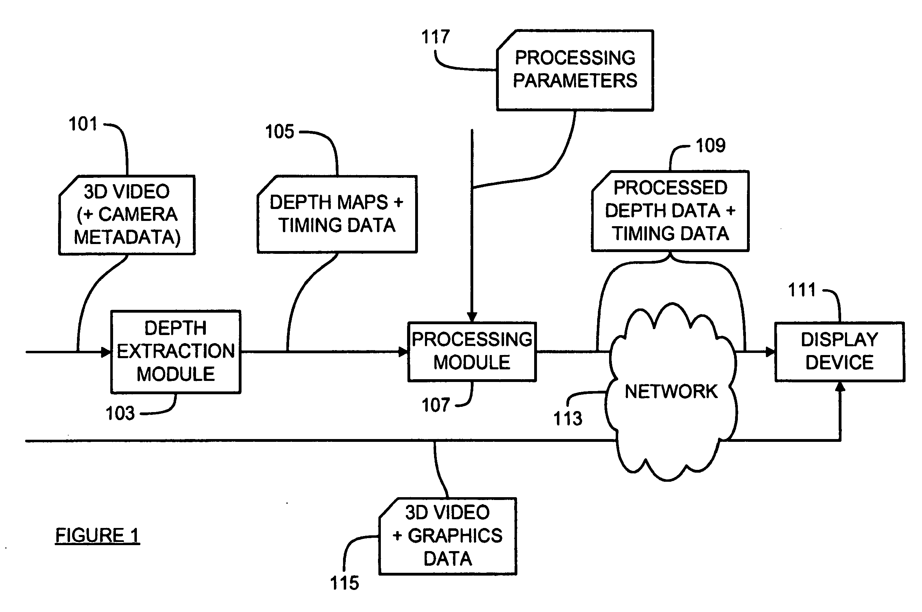

Referring now to Figure 1, an input stream of 3D video data 101 is received at a headend, typically in an uncompressed format. The 3D video can be received as two separate streams of frame accurately synchronized 2D video data, one for the left-eye image and one for the right-eye image, which can then be combined to form 3D video; or can be received as a single stream where the left-eye and right-eye images are encoded as the single stream. Different formats can be used to place the left-eye and right-eye images into a single stream. These include: placing reduced resolution images for the left-eye and right-eye side-by-side or above and below the image of a normal 2D picture; or placing alternating lines of the left-eye and right-eye, one after the other; or encoding an image for the left-eye followed by an image for the right-eye, and then repeating this sequence of left-right images. The formats used are often related, either entirely or in part, to the properties and mechanisms of the end 3D display device.

Each frame of the 3D video data is associated with a time code that provides a time reference for identification and synchronization. For example, each frame may be associated with a SMPTE timecode (as defined in the *SMPTE 12M* specification of the Society of Motion Picture and Television Engineers (SMPTE)). The SMPTE time codes may in turn be mapped to MPEG presentation time stamps (PTS) (as defined in *International Standard ISO*/*IEC 13818-1, Information technology - Generic coding of moving pictures and associated audio information: Systems -* a metadata field in an MPEG-2 Transport Stream or Program Stream that is used to achieve synchronization of programs' separate elementary streams (for example video, audio, subtitles) when presented to the viewer) - using synchronized auxiliary data (as defined in *ETSI TS 102 823 Digital Video Broadcasting (DVB); Specification for the carriage of synchronized auxiliary data in DVB transport streams*.) Alternatively, each frame may be associated with an MPEG PTS.

The 3D video data may also be accompanied by camera metadata defining parameters of the camera(s) used to record the 3D video such as camera location, lens parameters, f-stop settings, focal distance, auto-focus information etc., and stereo camera parameters such as the relative separations and angle of the stereo cameras.)

The 3D video data and optional camera metadata is passed to depth extraction module 103, which is operable to produce a depth map for each frame of the 3D video data according to any known depth extraction technique (e.g. as described in "Depth Extraction System Using Stereo Pairs", Ghaffar, R. et al., Lecture Notes in Computer Science, Springer Berlin/Heidelberg, ISSN 0302-9743, Volume 3212/2004*).* A depth map typically provides depth values (typically 24 or 32 bit) for pixel locations of a corresponding frame of 3D video. A depth value conveys the extracted estimate of the depth (or distance from the camera) of a pixel location in the 3D video frame. Each depth map is associated with timing data (e.g. SMPTE time code or MPEG PTS, as described previously) used to synchronize a depth map with the frame of 3D video from which it was generated. A depth map produced for each frame of the 3D video data represents a large amount of information. The depth maps and timing data 105 are stored in a memory (not shown) and then passed to processing module 107, together with processing parameters 117, when required for processing.

Processing parameters 117 enable the temporal and/or spatial filtering of the depth maps so that the quantity of data being processed can be reduced. The depth maps can be temporally filtered by processing selected sequences of depth maps corresponding to a selected sequence of the 3D video (e.g. if a graphics item is only to be displayed for a limited period of time). The depth maps can be spatially filtered by processing selected regions of depth maps (e.g. if a graphics item only overlays part of the 3D video). Examples of typical processing parameters 117 include:
- Frame sequence: specifies a sequence of depth maps (associated with a sequence of frames of 3D video) that are to be processed to determine a recommended graphics item depth. The frame sequence parameter typically comprises an identification of the start frame in the sequence; and either a sequence duration or an identification of the end frame in the sequence. The sequence of depth maps can be identified and extracted using the timing data that accompanied the depth maps;
- Region location and size: specifies a region of the depth map to be processed corresponding to a region of the 3D video that a particular graphics item will overlay. Location is typically specified using an (x,y) coordinate location (e.g. where x and y can be specified using pixels; or using numbers in the range 0 to 1 (if the origin (0,0) is defined as being at the bottom left of the screen); or using numbers in the range -1 to +1 (of the origin (0,0) is defined as being at the centre of the screen) or using percentage ranges etc.). Size (both x and y components) is typically specified using the same system as that used for location;
- Region tag: specifies a name for the region and allows multiple regions to be specified and processed;
- Alternate region: specifies one or more alternate region(s) (typically by location and size) that could be used for the graphics (e.g. to allow display device 111 or a user of display device 111 to configure which region to use for a particular graphics item);
- Region movement: specifies how far a region defined by the region location and size parameters can move (typically translational movement) in order to avoid a depth conflict (e.g. allowing a region for a particular graphics item to move to the side or up/down if the recommended depth exceeds a maximum value (see below for details of the depth parameter); or if an object in the 3D video moves in front of the graphics item). Region movement (both x and y components) is typically specified using the same system as that used for location. A maximum limit for how fast the region can move may also be specified. This is typically specified as a maximum change of x and/or y component per frame. The second order differential (i.e. a maximum change of change of x and/or y component per frame) could also be specified;
- Region size adjustment: specifies how much a region defined by the region location and size parameters can change in size as an alternative (or as well as) moving in space and/or depth (see below for details of the depth parameter). Size adjustment (x and/or y components) is typically specified using the same system as that used for location;
- Depth: used to specify a backward and forward depth for a region defined by the region location and size parameters. Backward depth is typically defined as depth into the screen, backwards and away from a viewer. Forward depth is typically defined as depth out of the screen, forwards and towards a viewer. Depth (typically a z-component orthogonal to the x and y components) is typically specified using the same system as that used for location. Multiple depth parameters could be set in order to specify a 'preferred' depth and one or more 'alternative' depths. Maximum depth limits can also be specified. Setting a maximum backward depth ensures that the graphics are not placed too far backward (e.g. behind an acceptable value when there is no 3D video behind the graphics item). Setting a maximum forward depth ensures that the graphics are not placed too far forward (e.g. so far forward that the graphics item would be uncomfortable to view at a normal viewing distance). If during processing a calculated depth exceeds a specified depth limit, then the region may be moved (typically according to the region movement and/or region size adjustment parameters) or may be temporarily deleted;
- Depth movement: specifies a maximum limit for how fast a region defined by the region location and size parameters can move in depth. This is typically specified as a maximum change of z component per frame. The second order differential (i.e. a maximum change of change of z component per frame) could also be specified. Setting the depth movement parameter is useful to prevent a graphics item from oscillating in response to the changes in the 3D video content it is overlaying;
- Depth jump: a flag specifying that, if the depth movement limit is exceeded, a region is moved to a different location (e.g. one of the regions specified by the alternate region parameter);
- Depth Extraction Interface Tags: some depth extraction systems are able to perform object tracking/face recognition. In certain embodiments of the present invention, the system may receive additional camera metadata derived, for example, from object tracking and giving specific object screen locations. In such systems, a depth extraction interface tag would enable a region to be described with additional information which would link it with information returned by the depth extraction system. Object extraction systems typically provide identifiers for objects that are being tracked. Human interaction may be used to resolve the identifiers to a suitable interface tag as described above, or the system may automatically provide a known interface tag value(s) or name(s) that the depth extraction module and processing module are configured with;
- Minimum Clearance: used to provide the minimum "clearance" between the overlaid graphic and the most forward underlying object in the 3D video.

Other processing parameters 117 will be apparent to someone skilled in the art.

Processing module 107 processes depth maps in order to extract information that is used to place graphics in the 3D video and convey the information in an effective format to display device 111. This involves indentifying areas/regions within 3D video frame sequences that will be used for graphics placement and a recommended depth at which graphics could be placed.

The output of processing module 107 is one or more streams of processed depth data and associated timing data 109 that defines a recommended depth at which to place graphics for one or more frame sequences of the 3D video; or one or more regions of the 3D video. Graphics items typically include subtitles; closed captions; asynchronous messages (e.g. event notifications, tuner conflict notifications); emergency announcements; logo bugs; interactive graphics applications; information banners; etc.

The processed depth data and timing data 109 is transmitted from the headend to a display device 111 via a network 113. The processed depth data and timing data 109 can be compressed prior to transmission. Display device 111 is typically an integrated receiver decoder (IRD); set top box (STB), digital video recorder (DVR) etc. connected in operation to a display such as a television. Network 113 is typically a one-way or two-way communication network, e.g. one or more of a satellite based communication network; a cable based communication network; a terrestrial broadcast television network; a telephony based communication network; a mobile telephony based communication network; an Internet Protocol (IP) television broadcast network; a computer based communication network; etc.

The graphics data and the 3D video data 115 are also transmitted from the headend to display device 111 via network 113. The graphics data and the 3D video data 115 can be transmitted separately from the processed depth data and associated timing data 109. Typically, the graphics data and the 3D video data 115 are compressed prior to transmission.

Display device 111 receives the processed depth data and timing data 109 and the 3D video and graphics data 115. When graphics are to be rendered over the 3D video, the graphics data is provided to a rendering engine within display device 111 together with the processed depth data. The rendering engine then generates the appropriate images and combines them with the 3D video at the recommended depth indicated by the processed depth data using standard combination techniques. It will be remembered that the processed depth data is accompanied by timing data allowing it to be associated and synchronized with the 3D video.

For example, whilst a viewer is watching a program, display device 111 identifies a conflict between the event currently be viewed and an event to be recorded. In order to display a graphic message to communicate this tuner conflict to the viewer, display device 111 consults the processed depth data and timing data 109 and locates the region associated with the OSD message class for the tuner conflict. This provides display device 111 with screen location and depth information. This depth information is then provided to the graphics rendering software and hardware together with the graphic to be displayed. The graphics rendering software converts the graphics and location and depth information into images that are perceived by the viewer as being placed at the intended depth and location.

The operation of processing module 107 will now be described in more detail. As was mentioned previously, processing module 107 processes depth maps in order to extract information from the depth maps that is used to place one or more graphics items in the 3D video and convey the information in an effective format to display device 111. This information is typically includes a recommended depth at which to place each graphics item and information about the region that the recommended depth relates to. The region information can be in the form of a region tag (as mentioned previously); or a screen area (defined by region size and location as mentioned previously; or by a vector outline). Other ways of describing a region will be apparent to someone skilled in the art.

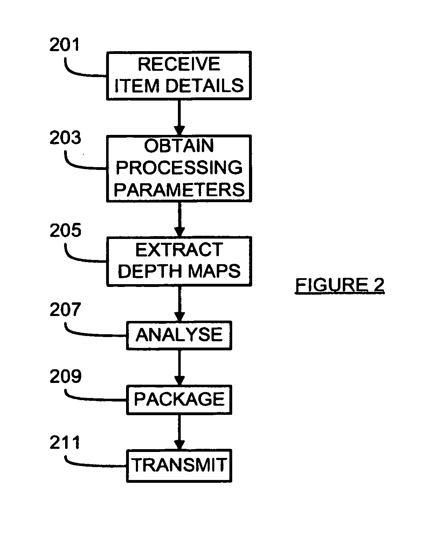

Referring to figure 2, in a first stage (step 201) the details of a graphics item are passed to processing module 107. These details include the screen location of the graphics item, the size of the graphics item and details of which frames of the 3D video the graphics item will appear over.

Next (step 203), processing module 107 uses the details of the graphics item to derive the frame sequence, region location and size processing parameters. In certain embodiments, processing module 107 may not derive the region size and location parameters (e.g. if details of the graphics item were not provided). In such a case, processing module 107 would use the entire depth map rather than just a region of the depth map. Processing module 107 may alternatively or additionally use the depth maps of all the frames of the 3D video in the processing rather than just the depth maps from a sequence of frames.

Then (step 205), processing module 107 extracts the appropriate depth maps for the (derived) frame sequence and analyses the (derived) region of the extracted depth maps (step 207) in order to calculate a furthest forward depth of pixels in the 3D video where the graphics item is to be placed so as not to conflict with 3D video image. That is, if the graphics item was placed behind (or backwards from) the furthest forward depth, a depth disparity may occur (e.g. if a graphics item was overlaid on an object in the 3D video but at a depth behind that object, the object may look as if some pixels of the object had been removed.) Typically, calculating the furthest forward depth involves calculating the depth of pixels in the derived region for frames in the sequence and extracting the furthest forward depth identified in the calculation for use as the recommended depth for the graphics item.

Next (step 209), processing module 107 packages the processed depth data (including the recommended depth for a graphics item overlaying that region; and the region location and size if appropriate) together with the timing data for the processed depth data and transmits it to display device 111 (step 211).

The above described process is repeated for each graphics item that could be selected (e.g. by a user or operator or broadcaster) to overlay the 3D video.

It can therefore be seen that it is not necessary to transmit entire depth maps of a 3D video to display device 111. Rather, only processed depth data (which includes recommended depths for graphics items) is transmitted representing a substantial saving in the amount of data that is transmitted from the headend and therefore processed by display device 111.

The above described process is suitable, for example, for calculating the recommended depth for subtitles to accompany the 3D video. In the simplest case, the 3D video scene may have a static depth throughout the video (e.g. a newsreader sitting at a desk). In this case, it may be possible to process a single depth map (or a single (short) sequence of depth maps) in order to determine a recommended depth at which to place the subtitles (or any other graphic item). This depth value can then remain constant throughout the 3D video.

However, objects and people in the 3D video often move around resulting in changing and varying distances between the camera and the nearest object (hence resulting in varying depth maps). Whilst it would be possible to calculate and adapt the depth of a graphics item on a frame by frame basis, this may result in a graphics item moving extensively in depth, which may be visually unappealing. It is therefore desirable, in certain embodiments of the present invention, to minimize or eliminate the movement of certain graphics items.

As described above, by analyzing a sequence of depth maps, it is possible to identify the furthest forward depth and choose that depth as the recommended depth for the duration of the 3D video; or for the duration of a sequence/scene of the 3D video; or for the duration of display of the graphics item. In this way, the graphics item can be placed in the 3D video without changing in depth on a frame by frame basis.

In the case of subtitles, processing module 107 may extract all depth maps for the 3D video and compare a region of each extracted depth map to be used for the subtitles in order to calculate the furthest forward depth that the subtitles can be placed without conflicting with 3D video image. Alternatively, each subtitle to be displayed could be considered as a separate graphics item, each associated with a defined sequence of frames of the 3D video. Details of the screen location and size for each subtitle will typically already be known from a subtitle generation process but subtitling of live content (e.g. news) can also be handled. These details can be passed to processing module 107 in step 201.

In alternative embodiments, other processing parameters (as described above) can be provided to processing module 107 for processing module 107 to use when comparing depth maps to calculate the processed depth data. For example, a depth limit (maximum depth value) can be provided to processing module 107 so that if the calculated recommended depth exceeds the depth limit, the depth limit could be used as the recommended depth. Where region movement and/or region size adjustment and/or alternate region parameters have been provided, the (x,y) positioning of the graphics item could be controlled so that the graphics item could be moved and/or resized according to those parameters in order to find a screen location for the graphics item where the recommended depth (which will be recalculated for the new region location and/or size) is within the depth limit. This is an extension of the ideas described above, whereby the (x,y) position of the region is used to vary the z positioning, and an optimization is made for the motion in all three directions. The new region location and/or size would typically be transmitted with the recommended depth as part of the processed depth data.

Alternatively or additionally, the depth movement parameter could be used to enable the recommended depth to vary across a sequence of frames. Thus, for instance, a subtitle could move slowly towards the camera during its display, minimizing its overall movement and speed of movement whilst also avoiding conflict with any object in the video.

In some embodiments, other information relevant to the placement of the graphics item can also be included as part of the processed depth data. For example, it may be possible to place the graphics item in a different screen location (identified by the alternate region processing parameter) in which case the recommended depth for the graphics item for the alternate region can also be calculated and included in the processed depth data.

In certain embodiments, object tracking functionality (well known from the field of image vision processing) may be used to track objects in the 3D video. It may be desirable to include a graphics item associated with an object that is being tracked (e.g. labeling the ball as such in a fast moving game such as a golf or hockey; or labeling a player with their name). In these embodiments, the output of object tracking could be provided to the processing module 107 as the region location parameter (with a suitable offset to avoid conflicting with the actual object being tracked, e.g. using the region movement parameter) enabling the depths for a graphics item labeling the tracked object to be calculated

Typically, the depth extraction and processing take place at the time the 3D video is ingested into the headend. This is often significantly in advance of the transmission. In such embodiments, the processed depth data can be provided in advance of the transmission of the 3D video. Alternatively, the processed depth data can be provided at the same time as the 3D video. The processed depth data is typically provided as a separate stream of data to the 3D video data.

In certain embodiments (e.g. for live broadcast events) processing module 107 processes the depth maps in real time. Due to the normal encoding delays at the headend, at least a second (and sometimes up to ten seconds) of the 3D video can be analyzed in order to calculate the processed depth data. Well known techniques such as regression analysis can be used to extrapolate depth motions of objects in the 3D video beyond those obtained from the analyzed depth maps and the extrapolated depth motions used to when calculating the recommended depths. The processed depth data is transmitted to display device 111 at the same time as the 3D video, typically once every second. However, in alternative embodiments the processed depth data may only be sent at less-regular intervals (e.g. every 5s) with a check being performed more regularly (e.g. every 1s) to see if the recommended depth has changed. If it has changed then it can be transmitted immediately.

It will be remembered that when graphics are to be rendered over the 3D video, the graphics data is provided to a rendering engine within display device 111 together with the processed depth data. The rendering engine then generates the appropriate images and combines them with the 3D video at the depth indicated by the processed depth data. In certain embodiments, display device 111 may be able to adapt where graphics items are placed based on user set preferences. For example, a user may be able to set a user preferred depth for graphics items that overrides the originally received recommended depth (assuming no conflict is indicated (e.g. where the user preferred depth is further forward than the transmitted recommended depth)). Furthermore, a user may also prefer to have a graphics item move to an alternate location on the screen (or disappear altogether) if the received recommended depth exceeds the user preferred depth (either backwards or forwards). Moreover, a user may prefer to always have the graphics displayed at the minimum depth, rather than see the graphics item moving in depth. Display device 111 may also be configured to make certain graphics items disappear if they conflict with other graphics items, or to correctly combine the graphics items at their relative depths if transparency options make such an alternative possible. The display device 111 may also be configured with different depth movement and/or region movement parameters.

The head-end may employ one of several alternative methods for region identification:
- a-priori defined screen areas (e.g. corresponding to known graphics assets);
- corresponding to objects extracted from the video (e.g. by image or object recognition methods);
- arbitrary identified regions of common depth or bounded by such mechanisms as edge detection.

As mentioned previously, a region can be described using one or more of a range of methods depending on the expected usage of the region. These can include a region tag that is used by display device 111, e.g. "NN" to indicate a Now-Next banner region, or a screen area from regular shapes such as a square or rectangle to complex shapes defined using a vector outline. As such, each region could include a range of descriptive information.

It is not necessary that regions always correspond directly to the location of a graphics item (graphical asset). There may be cases (e.g. for complex interactive applications) where the range of different choices in graphics items that may be rendered at a user's request are so variable as to prevent simplistic regions for each graphics item. Instead, display device 111 may receive details of multiple regions (each with a recommended depth), and then, using information about the graphics item(s), identify the region(s) that the graphics item(s) will overlap with. Display device 111 would then choose an appropriate depth based on an analysis of the recommended depth for all regions. For example, display device 111 may use the graphics item to identify the screen area that the graphics item will cover, and then consult the set of regions. Display device 111 would then identify which region(s) is/are covered by the graphics item, and from this identification process extract the appropriate depth positioning information. Typically, the region(s) include descriptions that allow their screen location/area to be identified.

It is also worth noting that a 'near plane' and a 'far plane' can be defined for graphics items. A 'near plane' is the nearest plane to a user viewing a three dimensional video (i.e. out of the screen) in which to place a graphics item. A. `far plane' is the furthest plane from a user viewing a three dimensional video (i.e. into the screen) in which to place a graphics item.

It is appreciated that software components of the present invention may, if desired, be implemented in ROM (read only memory) form. The software components may, generally, be implemented in hardware, if desired, using conventional techniques. It is further appreciated that the software components may be instantiated, for example: as a computer program product; on a tangible medium; or as a signal interpretable by an appropriate computer.

It is appreciated that various features of the invention which are, for clarity, described in the contexts of separate embodiments may also be provided in combination in a single embodiment. Conversely, various features of the invention which are, for brevity, described in the context of a single embodiment may also be provided separately or in any suitable subcombination.

It will be appreciated by persons skilled in the art that the present invention is not limited by what has been particularly shown and described hereinabove. Rather the scope of the invention is defined only by the claims which follow:

## Claims

1. A method of generating a recommended depth value for use in displaying a graphics item over a three dimensional video, said method comprising at a headend:
receiving a three dimensional video comprising video frames;
analyzing a sequence of said video frames in turn to produce a sequence of depth maps, each depth map in said sequence of depth maps being associated with timing data relating that depth map to a corresponding video frame in said sequence of video frames, each depth map comprising depth values, each depth value representing a depth of a pixel location in its corresponding video frame;
selecting a region in the depth maps of said sequence of depth maps using details of said graphics item;
analyzing said region in the depth maps of said sequence of depth maps to identify a furthest forward depth value for said region in said sequence of depth maps; and
transmitting said furthest forward depth value as said recommended depth value for said region to a display device and region information describing said region.

2. The method of claim 1, said method further comprising:
selecting at least one additional region in the depth maps of said sequence of depth maps;
analyzing said at least one additional region in the depth maps of said sequence to identify at least one additional furthest forward depth value for said at least one additional region; and
transmitting to said display device said at least one additional furthest forward depth value as an additional recommended depth value for said at least one additional region and additional region information describing said at least one additional region.

3. The method of claim 1, said method further comprising:
receiving details of said graphics item, said details comprising a two dimensional screen location where said graphics item is to be displayed and a size of said graphics item; and
determining said region from said details of said graphics item.

4. The method of any preceding claim, said method further comprising:
receiving a maximum depth value;
comparing said furthest forward depth value with said maximum depth value; and
transmitting to said display device said maximum depth value as said recommended depth value if said furthest forward depth value exceeds said maximum depth value, otherwise transmitting said furthest forward depth value as said recommended depth value.

5. The method of claim 1, said method further comprising:
selecting an alternate region in the depth maps of said sequence of depth maps;
analyzing said alternate region in the depth maps of said sequence to identify an alternate furthest forward depth value for said alternate region; and
transmitting to said display device said alternate furthest forward depth value as an alternate recommended depth value for said alternate region and alternate region information describing said alternate region.

6. The method of any preceding claim, wherein prediction of a change in depth value is used to identify said furthest forward depth.

7. The method of any preceding claim, wherein said recommended depth value is transmitted independently of said three dimensional video.

8. A method of operating a display device to display a graphics item over a three dimensional video, said method comprising at said display device:
receiving said three dimensional video comprising video frames;
receiving said graphics item;
receiving a recommended depth value for use in displaying said graphics item over said three dimensional video; and
displaying said graphics item over said three dimensional video at said recommended depth value,
wherein said recommended depth value is generated according to the method of generating a recommended depth value of any of claims 1 to 7.

9. A method of operating a display device to display a graphics item over a three dimensional video, said method comprising at said display device:
, receiving said three dimensional video comprising video frames;
receiving said graphics item;
receiving a recommended depth value for use in displaying said graphics item over said three dimensional video; and
displaying said graphics item over said three dimensional video at said recommended depth value,
wherein said recommended depth value is generated according to the method of generating a recommended depth value of any of claims 1 to 4;
wherein said method of generating a recommended depth value further comprises at said headend:
selecting an alternate region in the depth maps of said sequence of depth maps;
analyzing said alternate region in the depth maps of said sequence to identify an alternate furthest forward depth value for said alternate region; and
transmitting to said display device said alternate furthest forward depth value as an alternate recommended depth value for said alternate region and alternate region information describing said alternate region to said display device;
said method further comprising determining, at said display device, which of said region and said alternate region to use for displaying said graphics item; and displaying said graphics item in said region or in said alternate region based on said determination.

10. The method of claim 9, wherein said determining is based on information received from a user.

11. The method of claim 9, wherein prediction of a change in depth value is used to identify said furthest forward depth.

12. The method of claim 9 or claim 11, wherein said recommended depth value is transmitted independently of said three dimensional video.

13. The method of claim 8, wherein said recommended depth value generation process further comprises at said headend:
selecting at least one additional region in the depth maps of said sequence of depth maps;
analyzing said at least one additional region in the depth maps of said sequence to identify at least one additional furthest forward depth value for said at least one additional region; and
transmitting to said display device said at least one additional furthest forward depth value as an additional recommended depth value for said at least one additional region and additional region information describing said at least one additional region;
said method further comprising:
displaying said graphics item at a furthest forward depth value of said recommended depth value and said at least one additional recommended depth value.

## Patentansprüche

1. Verfahren zum Erzeugen eines empfohlenen Tiefenwerts zur Verwendung beim Anzeigen eines Grafik-Items über ein dreidimensionales Video, wobei das Verfahren an einer Kopfstelle Folgendes umfasst:
Empfangen eines Videorahmen umfassenden dreidimensionalen Videos;
sequenzielles Analysieren einer Sequenz der Videorahmen, um eine Sequenz von Tiefenabbildungen zu erzeugen, wobei jede Tiefenabbildung in der Sequenz von Tiefenabbildungen mit Timing-Daten assoziiert ist, die diese Tiefenabbildung zu einem Videorahmen in der Sequenz von Videorahmen in Beziehung setzen, wobei jede Tiefenabbildung Tiefenwerte umfasst, wobei jeder Tiefenwert eine Tiefe einer Pixelposition in ihrem entsprechenden Videorahmen repräsentiert;
Auswählen eines Bereichs in den Tiefenabbildungen der Sequenz von Tiefenabbildungen unter Verwendung von Details des Grafik-Items;
Analysieren des Bereichs in den Tiefenabbildungen der Sequenz von Tiefenabbildungen, um einen am weitesten vorne liegenden Tiefenwert für den Bereich in der Sequenz von Tiefenabbildungen zu identifizieren; und
den am weitesten vorne liegenden Tiefenwert als den empfohlenen Tiefenwert für den Bereich und den Bereich beschreibende Bereichsinformation an eine Displayeinrichtung übertragen.

2. Verfahren nach Anspruch 1, wobei das Verfahren außerdem umfasst:
Auswählen von mindestens einem zusätzlichen Bereich in den Tiefenabbildungen der Sequenz von Tiefenabbildungen;
Analysieren des mindestens einen zusätzlichen Bereichs in den Tiefenabbildungen der Sequenz, um mindestens einen zusätzlichen am weitesten vorne liegenden Tiefenwert für den mindestens einen zusätzlichen Bereich zu identifizieren; und
an die Displayeinrichtung den mindestens einen zusätzlichen am weitesten vorne liegenden Tiefenwert als einen zusätzlichen empfohlenen Tiefenwert für den mindestens einen zusätzlichen Bereich und zusätzliche Bereichsinformation übertragen, die den mindestens einen zusätzlichen Bereich beschreibt.

3. Verfahren nach Anspruch 1, wobei das Verfahren außerdem umfasst:
Empfangen von Details des Grafik-Items, wobei die Details eine zweidimensionale Bildschirmposition umfassen, wo das Grafik-Item anzuzeigen ist, und einer Größe des Grafik-Items; und
Bestimmen des Bereichs aus den Details des Grafik-Items.

4. Verfahren nach einem vorhergehenden Anspruch, wobei das Verfahren außerdem umfasst:
Empfangen eines maximalen Tiefenwerts;
Vergleichen des am weitesten vorne liegenden Tiefenwerts mit dem maximalen Tiefenwert; und
an die Displayeinrichtung den maximalen Tiefenwert als den empfohlenen Tiefenwert übertragen, falls der am weitesten vorne liegende Tiefenwert den maximalen Tiefenwert übersteigt, andernfalls den am weitesten vorne liegenden Tiefenwert als den empfohlenen Tiefenwert übertragen.

5. Verfahren nach Anspruch 1, wobei das Verfahren außerdem umfasst:
Auswählen eines alternativen Bereichs in den Tiefenabbildungen der Sequenz von Tiefenabbildungen;
Analysieren des alternativen Bereichs in den Tiefenabbildungen der Sequenz, um einen alternativen am weitesten vorne liegenden Tiefenwert für den alternativen Bereich zu identifizieren; und
an die Displayeinrichtung den alternativen am weitesten vorne liegenden Tiefenwert als einen alternativen empfohlenen Tiefenwert für den alternativen Bereich und alternative Bereichsinformation übertragen, die den alternativen Bereich beschreibt.

6. Verfahren nach einem vorhergehenden Anspruch, worin Vorhersage einer Änderung des Tiefenwerts verwendet wird, um die am weitesten vorne liegende Tiefe zu identifizieren.

7. Verfahren nach einem vorhergehenden Anspruch, worin der empfohlene Tiefenwert unabhängig vom dreidimensionalen Video übertragen wird.

8. Verfahren zum Betrieb einer Displayeinrichtung, um ein Grafik-Item über ein dreidimensionales Video anzuzeigen, wobei das Verfahren an der Displayeinrichtung Folgendes umfasst:
Empfangen des Videorahmen umfassenden dreidimensionalen Videos;
Empfangen des Grafik-Items;
Empfangen eines empfohlenen Tiefenwerts zur Verwendung beim Anzeigen des Grafik-Items über das dreidimensionale Video; und
Anzeigen des Grafik-Items über das dreidimensionale Video am empfohlenen Tiefenwert,
worin der empfohlene Tiefenwert gemäß dem Verfahren des Erzeugens eines empfohlenen Tiefenwerts nach einem der Ansprüche 1 bis 7 erzeugt wird.

9. Verfahren zum Betrieb einer Displayeinrichtung, um ein Grafik-Item über ein dreidimensionales Video anzuzeigen, wobei das Verfahren an der Displayeinrichtung Folgendes umfasst:
Empfangen des Videorahmen umfassenden dreidimensionalen Videos;
Empfangen des Grafik-Items;
Empfangen eines empfohlenen Tiefenwerts zur Verwendung beim Anzeigen des Grafik-Items über das dreidimensionale Video; und
Anzeigen des Grafik-Items über das dreidimensionale Video am empfohlenen Tiefenwert,
worin der empfohlene Tiefenwert gemäß dem Verfahren des Erzeugens eines empfohlenen Tiefenwerts nach einem der Ansprüche 1 bis 4 erzeugt wird;
worin das Verfahren des Erzeugens eines empfohlenen Tiefenwerts an der Kopfstelle außerdem Folgendes umfasst:
Auswählen eines alternativen Bereichs in den Tiefenabbildungen der Sequenz von Tiefenabbildungen;
Analysieren des alternativen Bereichs in den Tiefenabbildungen der Sequenz, um einen alternativen am weitesten vorne liegenden Tiefenwert für den alternativen Bereich zu identifizieren; und
an die Displayeinrichtung den alternativen am weitesten vorne liegenden Tiefenwert als einen alternativen empfohlenen Tiefenwert für den alternativen Bereich und alternative Bereichsinformation übertragen, die den alternativen Bereich für die Displayeinrichtung beschreibt;
wobei das Verfahren außerdem umfasst, dass an der Displayeinrichtung bestimmt wird, welcher des Bereichs und des alternativen Bereichs zum Anzeigen des Grafik-Items zu verwenden ist; und das Grafik-Item im Bereich oder im alternativen Bereich auf der Basis der Bestimmung anzeigen.

10. Verfahren nach Anspruch 9, worin das Bestimmen auf von einem Benutzer empfangener Information basiert.

11. Verfahren nach Anspruch 9, worin Vorhersage einer Änderung des Tiefenwerts verwendet wird, um die am weitesten vorne liegende Tiefe zu identifizieren.

12. Verfahren nach Anspruch 9 oder Anspruch 11, worin der empfohlene Tiefenwert unabhängig vom dreidimensionalen Video übertragen wird.

13. Verfahren nach Anspruch 8, worin der Generationsprozess für den empfohlenen Tiefenwert an der Kopfstelle außerdem Folgendes umfasst:
Auswählen von mindestens einem zusätzlichen Bereich in den Tiefenabbildungen der Sequenz von Tiefenabbildungen;
Analysieren des mindestens einen zusätzlichen Bereichs in den Tiefenabbildungen der Sequenz, um mindestens einen zusätzlichen am weitesten vorne liegenden Tiefenwert für den mindestens einen zusätzlichen Bereich zu identifizieren; und
an die Displayeinrichtung den mindestens einen zusätzlichen am weitesten vorne liegenden Tiefenwert als einen zusätzlichen empfohlenen Tiefenwert für den mindestens einen zusätzlichen Bereich und zusätzliche Bereichsinformation übertragen, die den mindestens einen zusätzlichen Bereich beschreibt;
wobei das Verfahren außerdem umfasst:
Anzeigen des Grafik-Items an einem am weitesten vorne liegenden Tiefenwert des empfohlenen Tiefenwerts und des mindestens einen zusätzlichen empfohlenen Tiefenwerts.

## Revendications

1. Procédé pour générer une valeur de profondeur recommandée à utiliser pour afficher un élément graphique sur une vidéo en trois dimensions, ledit procédé comprenant, au niveau d'une tête de réseau, les étapes suivantes :
recevoir une vidéo en trois dimensions comprenant des trames vidéo ;
analyser une séquence desdites trames vidéo alternativement pour produire une séquence des cartes de profondeur, chaque carte de profondeur dans ladite séquence des cartes de profondeur étant associée à des données de rythme reliant cette carte de profondeur à une trame vidéo correspondante dans ladite séquence de trames vidéo, chaque carte de profondeur comprenant des valeurs de profondeur, chaque valeur de profondeur représentant une profondeur d'une position de pixel dans sa trame vidéo correspondante ;
sélectionner une région dans les cartes de profondeur de ladite séquence de cartes de profondeur au moyen de détails dudit élément graphique ;
analyser ladite région dans les cartes de profondeur de ladite séquence de cartes de profondeur pour identifier une valeur de profondeur la plus en avant pour ladite région dans ladite séquence de cartes de profondeur ; et
transmettre ladite valeur de profondeur la plus en avant comme ladite valeur de profondeur recommandée pour ladite région à un dispositif d'affichage ainsi que des informations de région décrivant ladite région.

2. Procédé selon la revendication 1, ledit procédé comprenant en outre les étapes suivantes :
sélectionner au moins une région supplémentaire dans les cartes de profondeur de ladite séquence de cartes de profondeur ;
analyser ladite au moins une région supplémentaire dans les cartes de profondeur de ladite séquence pour identifier au moins une valeur de profondeur la plus en avant supplémentaire pour ladite au moins une région supplémentaire ; et
transmettre audit dispositif d'affichage ladite au moins une valeur de profondeur la plus en avant supplémentaire comme une valeur de profondeur recommandée supplémentaire pour ladite au moins une région supplémentaire ainsi que des informations de région supplémentaire décrivant ladite au moins une région supplémentaire.

3. Procédé selon la revendication 1, ledit procédé comprenant en outre les étapes suivantes :
recevoir des détails dudit élément graphique, lesdits détails comprenant une position d'écran bidimensionnel où ledit élément graphique doit être affiché ainsi qu'une taille dudit élément graphique ; et
déterminer ladite région à partir desdits détails dudit élément graphique.

4. Procédé selon l'une quelconque des revendications précédentes, ledit procédé comprenant en outre les étapes suivantes :
recevoir une valeur de profondeur maximale ;
comparer ladite valeur de profondeur la plus en avant à ladite valeur de profondeur maximale ; et
transmettre audit dispositif d'affichage ladite valeur de profondeur maximale comme ladite valeur de profondeur recommandée si ladite valeur de profondeur la plus en avant dépasse ladite valeur de profondeur maximale, sinon transmettre ladite valeur de profondeur la plus en avant comme ladite valeur de profondeur recommandée.

5. Procédé selon la revendication 1, ledit procédé comprenant en outre les étapes suivantes :
sélectionner une région alternative dans les cartes de profondeur de ladite séquence de cartes de profondeur ;
analyser ladite région alternative dans les cartes de profondeur de ladite séquence pour identifier une valeur de profondeur la plus en avant alternative pour ladite région alternative ; et
transmettre audit dispositif d'affichage ladite valeur de profondeur la plus en avant alternative comme une valeur de profondeur recommandée alternative pour ladite région alternative ainsi que des informations de région alternative décrivant ladite région alternative.

6. Procédé selon l'une quelconque des revendications précédentes, dans lequel une prévision d'un changement dans une valeur de profondeur est utilisée pour identifier ladite profondeur la plus en avant.

7. Procédé selon l'une quelconque des revendications précédentes, dans lequel ladite valeur de profondeur recommandée est transmise indépendamment de ladite vidéo en trois dimensions.

8. Procédé de fonctionnement d'un dispositif d'affichage pour afficher un élément graphique sur une vidéo en trois dimensions, ledit procédé comprenant, au niveau dudit dispositif d'affichage, les étapes suivantes :
recevoir ladite vidéo en trois dimensions comprenant des trames vidéo ;
recevoir ledit élément graphique ;
recevoir une valeur de profondeur recommandée à utiliser pour afficher ledit élément graphique sur une vidéo en trois dimensions ; et
afficher ledit élément graphique sur ladite vidéo en trois dimensions à ladite valeur de profondeur recommandée,
où ladite valeur de profondeur recommandée est générée conformément au procédé de génération d'une valeur de profondeur recommandée de l'une quelconque des revendications 1 à 7.

9. Procédé de fonctionnement d'un dispositif d'affichage pour afficher un élément graphique sur une vidéo en trois dimensions, ledit procédé comprenant, au niveau dudit dispositif d'affichage, les étapes suivantes :
recevoir ladite vidéo en trois dimensions comprenant des trames vidéo ;
recevoir ledit élément graphique ;
recevoir une valeur de profondeur recommandée à utiliser pour afficher ledit élément graphique sur ladite vidéo en trois dimensions ; et
afficher ledit élément graphique sur ladite vidéo en trois dimensions à ladite valeur de profondeur recommandée,
où ladite valeur de profondeur recommandée est générée conformément au procédé de génération d'une valeur de profondeur recommandée de l'une quelconque des revendications 1 à 4 ;
où ledit procédé de génération d'une valeur de profondeur recommandée comprend en outre, au niveau de ladite tête de réseau, les étapes suivantes :
sélectionner une région alternative dans les cartes de profondeur de ladite séquence de cartes de profondeur ;
analyser ladite région alternative dans les cartes de profondeur de ladite séquence pour identifier une valeur de profondeur la plus en avant alternative pour ladite région alternative ; et
transmettre audit dispositif d'affichage ladite valeur de profondeur la plus en avant alternative comme une valeur de profondeur recommandée alternative pour ladite région alternative ainsi que des informations de région alternative décrivant ladite région alternative audit dispositif d'affichage ;
ledit procédé comprenant en outre de déterminer, au niveau dudit dispositif d'affichage, laquelle de ladite région et de ladite région alternative utiliser pour afficher ledit élément graphique ; et d'afficher ledit élément graphique dans ladite région ou dans ladite région alternative sur la base de ladite détermination.

10. Procédé selon la revendication 9, dans lequel ladite détermination est basée sur des informations reçues d'un utilisateur.

11. Procédé selon la revendication 9, dans lequel une prévision d'un changement dans une valeur de profondeur est utilisée pour identifier ladite profondeur la plus en avant.

12. Procédé selon la revendication 9 ou la revendication 11, dans lequel ladite valeur de profondeur recommandée est transmise indépendamment de ladite vidéo en trois dimensions.

13. Procédé selon la revendication 8, dans lequel ledit processus de génération d'une valeur de profondeur recommandée comprend en outre, au niveau de ladite tête de réseau, les étapes suivantes :
sélectionner au moins une région supplémentaire dans les cartes de profondeur de ladite séquence de cartes de profondeur ;
analyser ladite au moins une région supplémentaire dans les cartes de profondeur de ladite séquence pour identifier au moins une valeur de profondeur la plus en avant supplémentaire pour ladite au moins une région supplémentaire ; et
transmettre audit dispositif d'affichage ladite au moins une valeur de profondeur la plus en avant supplémentaire comme une valeur de profondeur recommandée supplémentaire pour ladite au moins une région supplémentaire ainsi que des informations de région supplémentaire décrivant ladite au moins une région supplémentaire ;
ledit procédé comprenant en outre l'étape suivante :
afficher ledit élément graphique à une valeur de profondeur la plus en avant de ladite valeur de profondeur recommandée et de ladite au moins une valeur de profondeur recommandée supplémentaire.
